# EUROPEAN PATENT SPECIFICATION

(11) **EP 1 498 645 B1**
(45) Date of publication and mention of the grant of the patent: **13.09.2006**
(21) Application number: 04254124.3
(22) Date of filing: 09.07.2004
(51) Int. Cl.: F16K 1/44

(54) **A valve**
Ventil
Soupape

(30) Priority: 18.07.2003 GB 0316884
(43) Date of publication of application: 19.01.2005
(73) Proprietor: SPIRAX-SARCO LIMITED, Cheltenham, Gloucestershire GL50 3EN (GB)
(72) Inventor: Hardman, Paul, Cumbria LA9 7HW (GB)
(74) Representative: Cheyne, John Robert Alexander M.

(56) References cited:
- EP-A- 1 188 973
- DE-A- 2 429 742
- FR-A- 588 211
- GB-A- 2 271 164
- US-B1- 6 220 290
- PATENT ABSTRACTS OF JAPAN vol. 1998, no. 12, 31 October 1998 (1998-10-31) & JP 10 196835 A (GLYCO KYODO NYUGYO KK), 31 July 1998 (1998-07-31)

## Description

This invention relates to a valve, and is more particularly concerned with a double isolation valve having a bleed facility.

Double isolation valves are used for health and safety reasons to protect workers working on an isolated part of a system such as a steam line.

A double isolation valve is disclosed in WO 02/29303. This valve comprises two rotary ball valves disposed in series in a common valve body. A bleed valve is provided between the rotary ball valves to release any pressure built up between them when the ball valves are in their closed positions.

Because the rotary ball valves are disposed side-by-side along a straight fluid flow path between end faces of the valve body, a constraint is imposed on the overall length of the valve body, which can make it difficult to achieve a desired face-to-face dimension in order to make the valve exchangeable with an existing single isolating valve.

FR-A-588211 discloses a valve comprising a valve body having oppositely disposed connection portions, inlet and outlet passages extending respectively from the connection portions within the body to an intermediate chamber, the intermediate chamber communicating with the inlet and outlet passages through respective ports, each port being independently closable by a respective valve element which is movable into and out of contact with the port, thereby to isolate the intermediate chamber from the respective inlet or outlet passage According to the present invention, the ports comprise valve seats defined by respective valve seat components fitted to the body, and the connection portions comprise parallel coupling faces.

Preferably, a bleed passage is provided for venting the intermediate chamber when both ports are closed. A stop valve may be provided to control flow through the bleed passage. The bleed passage may communicate with a bleed duct which has an open end to permit bleed from the intermediate chamber into the atmosphere, or into a suitable container provided beneath the open end of the bleed duct.

In preferred embodiments, the valve elements are displaceable into and out of contact with their valve seats along axes which lie in a common plane parallel to the coupling faces. Consequently, the valve elements are at the same position along the valve body between the coupling faces. This enables the face-to-face dimension of the valve to be minimised.

In one preferred embodiment, the movement axes of the valve elements are aligned with each other, the valve elements moving along the common axis in opposite directions into contact with the valve seats.
Operating elements, such as handwheels, for the valve elements are thus provided on opposite sides of the valve body.

In an alternative embodiment, the movement axes of the valve elements intersect each other. This enables the valve to be fitted with the operating elements for the valve elements presented in a more readily accessible manner in some installations. The angle of inclination may be any suitable angle to suit a particular installation, and the valve may be supplied in a range of different angles. For example, an individual valve may have an angle of intersection in the range 60° to 180°, with specific variants having angles of intersection of 80°, 90° and 120°, in addition to a variant having aligned axes (i.e. an angle of intersection of 180°).

In the preferred embodiments, each valve element has a sealing face, for engagement with the respective valve seat, which extends transversely of the movement axis. Each valve seat may be circular, surrounding the respective port.

Movement of the valve elements into and out of contact with the respective valve seats may be achieved by a rotatable spindle which may be sealed with respect to the valve body by a bellows arrangement or by a gland.

The coupling faces of the valve body may be provided on coupling flanges, and the spacing between the coupling faces may comply substantially with engineering standards such as EN558 and ASME B16.10. These standards define the face-to-face dimension of pipeline components in relation to the internal diameter of the pipeline.

In the context of this specification, substantial compliance with an engineering standard means that the spacing in question is sufficiently close to that specified in the standard to enable the product in question to replace a product in strict accordance with the standard without requiring modification of the adjacent pipework.

For a better understanding of the present invention, and to show more clearly how it may be carried into effect, reference will now be made, by way of example, to the accompanying drawings, in which:
Figure 1 shows a double isolating valve;
Figure 2 is a sectional view of the valve of Figure 1;
Figure 3 corresponds to Figure 1 but shows an alternative embodiment;
Figure 4 shows another embodiment of double isolating valve; and
Figure 5 is a sectional view of the valve of Figure 4.

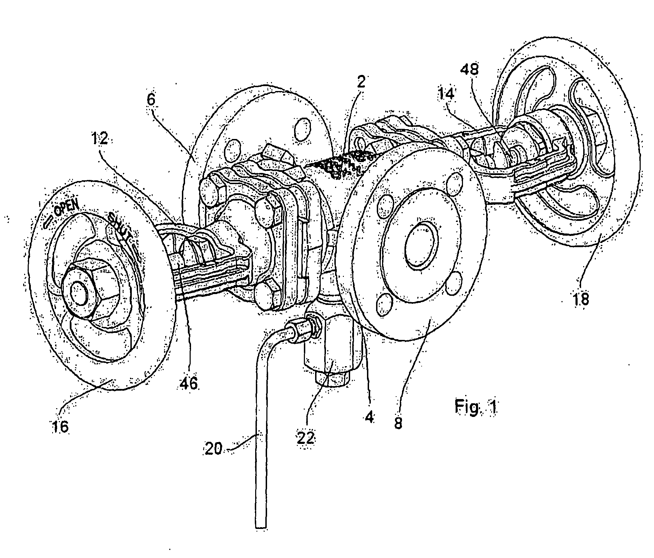

Figure 1 shows a valve comprising a valve body 2 provided with end flanges 4, 6, having respective coupling faces 8, 10. Oppositely disposed valve operating assemblies 12, 14, are connected to the body 2 each including a valve operating element 16, 18 in the form of a handwheel.

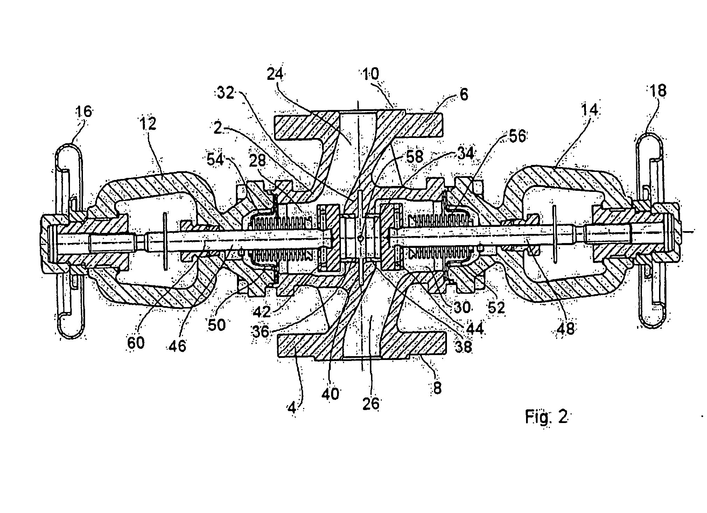

A stop valve 22 is fitted to the valve body 2 to control flow from a bleed passage 58 (Figure 2) to a bleed duct 20. Inlet and outlet passages 24, 26 are formed within the body 2 and open at the faces 8, 10. The passages 24, 26 communicate with valve chambers 28, 30 which are separated from each other by a wall 32. A passage, defining an intermediate chamber 34, extends through the wall 32 and is provided with valve seat inserts 36, 38 which project into the valve chambers 28, 30 and stand proud of the adjacent surface of the wall 32. The chamber 34 has a circumferential radial extension 40 which provides a barrier to leakage through the material of the wall 32.

In the condition shown in Figure 2, the intermediate chamber 34 is isolated from the valve chambers 28, 30 by respective valve elements, 42, 44 which engage the valve seats 36, 38. The valve elements 42, 44 are mounted, with some pivotable freedom, on spindles 46, 48 which are each supported in a conventional manner in the operating assemblies 12, 14 for rotation by the handwheels 16, 18 so as to move the valve elements 42, 44 towards and away from the valve seats 36, 38.

The operating assemblies 12, 14 are bolted to the body 2, trapping a respective cup 50, 52. A bellows 54, 56 is sealingly connected at each end to the cup 50, 52 so as to provide seals between the valve chambers 28, 30 and the exterior.

The bleed passage 58 extends from the intermediate chamber 34 and leads to the bleed duct 20 via the stop valve 22.

In the condition shown in Figure 2, the valve is closed, and so flow from the inlet passage 24 to the outlet passage 26 is prevented by the contact between the valve elements 42, 44 with the respective valve seats 36, 38. Even if leakage occurs between one of the valve elements 42, 44 and its seat 36, 38, the other valve element will prevent flow through the intermediate passage 34. If leakage occurs at the upstream valve element 42, fluid will enter the intermediate chamber 34, but will drain away through the bleed passage 58 so that the build-up of pressure within the intermediate chamber 34 is prevented. If the material of the body 2, for example a cast metal such as iron, becomes porous, the penetration of fluid between the valve chambers 28, 30 is prevented, or at least restricted, by the extension 40 since any fluid entering the extension 40 will be drained into the intermediate chamber 34 and then through the bleed passage 58.

Consequently, the valve shown in Figures 1 and 2 provides a highly reliable shut-off means for preventing fluid upstream of the valve from flowing to pipework and other components situated downstream of the valve.

It will be appreciated that the valve elements 42, 44 are moved in operation along a common axis 60, being the axis of rotation of the spindles 46, 48. Thus, the axes of movement of the valve elements 42, 44 lie in a common plane which is parallel to the coupling faces 8, 10. This means that the face-to-face dimension of the valve (i.e. the distance between the coupling faces 8 and 10) can be minimised, so enabling this face-to-face distance to comply with the relevant engineering standards, such as EN558 and ASME B16.10.

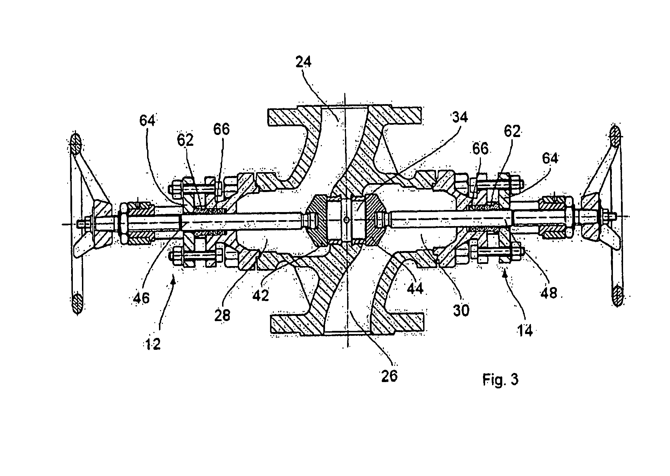

Figure 3 shows a modification of the valve shown in Figure 2. In the embodiment of Figure 3, the bellows seal arrangements 50, 54; 52, 56 are replaced by a gland seal comprising a gland 62 which is acted upon by a pressure plate 64 to compress seals 66. The seals 66 engage the spindles 46, 48 to prevent leakage from the valve chambers 28, 30.

The valve shown in Figure 3 lacks the radial extension 40 from the intermediate chamber 34, but such an extension can be included if required.

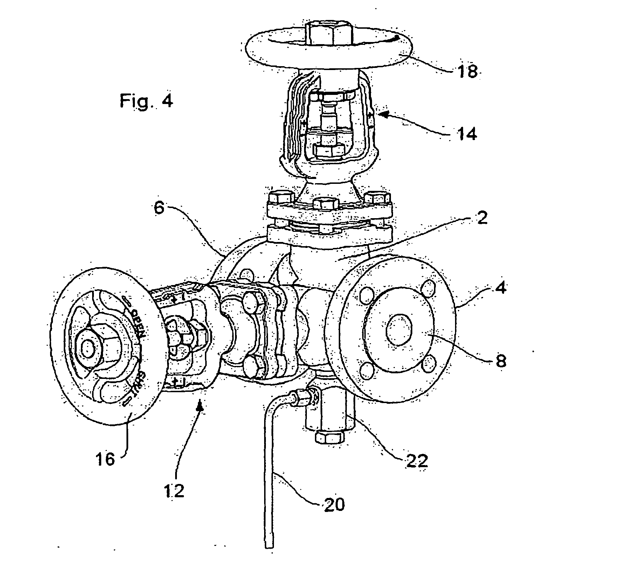

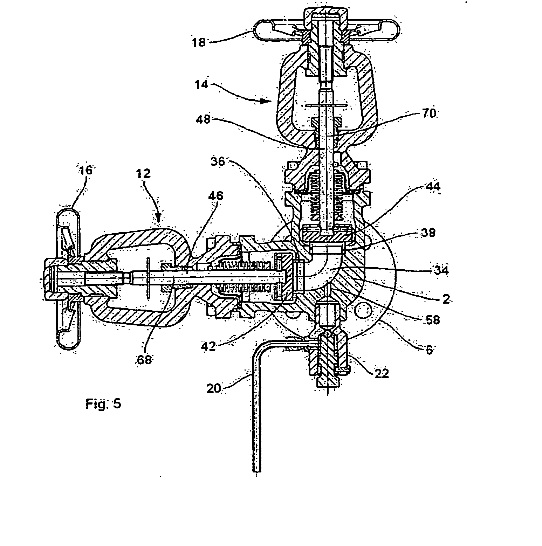

Figures 4 and 5 show a valve similar to that of Figures 1 and 2, except that the valve elements 42, 44 are moved into and out of contact with the seats 36, 38 along axes 68, 70 which intersect each other at 90°. It will be appreciated that different angles of intersection are possible to suit particular circumstances. An advantage of the arrangement shown in Figures 4 and 5 is that the handwheels 16, 18 can be positioned for improved access while retaining the bleed passage 58 at the bottom of the intermediate chamber 34.

In more detail, it will be appreciated that, as compared with the valve shown in Figure 1, the operating assembly 14, including the valve element 44 and associated components, is turned upwards through 90° in the embodiment of Figures 4 and 5. This arrangement enables the valve to be fitted, for example, against a wall directly to the right of the valve as shown in Figure 5.

The intermediate chamber 34 is arcuate in the embodiment of Figures 4 and 5, with the bleed passage 58 situated on its outer radius.

The valve shown in Figures 4 and 5 uses a bellows sealing arrangement for the valve spindles 46, 48, similar to the arrangement shown in Figures 1 and 2, but it will be appreciated that a gland sealing arrangement, as shown in Figure 3, could be used.

The structure of the valves shown in the Figures enables the face-to-face dimension to be made the same as that of a single isolating valve of the same bore diameter. Thus, a valve in accordance with the present invention can replace an existing single isolating valve without requiring any rearrangement of the adjacent pipework.

## Claims

1. A valve comprising a valve body (2) having oppositely disposed connection portions (8, 10), inlet and outlet passages (24, 26) extending respectively from the connection portions (8, 10) within the body (2) to an intermediate chamber (34), the intermediate chamber (34) communicating with the inlet and outlet passages (24, 26) through respective ports (36, 38), each port (36, 38) being independently closable by a respective valve element (42, 44) which is movable into and out of contact with the port (36, 38), thereby to isolate the intermediate chamber from the respective inlet or outlet passage (24, 26), **characterised in that** the ports (36, 38) comprise valve seats defined by respective valve seat components fitted to the body (2), and **in that** the connection portions (8, 10) comprise parallel coupling faces .

2. A valve as claimed in claim 1, **characterised in that** a bleed passage (58) is provided which opens into the intermediate chamber (34) at a position between the valve seat components (36, 39).

3. A valve as claimed in claim 2, **characterised in that** a stop valve (22) is provided for controlling flow through the bleed passage (58).

4. A valve as claimed in claim 2 or 3, **characterised in that** the bleed passage (58) communicates with a bleed duct (20), the end of the bleed duct (20) away from the bleed passage (58) being open.

5. A valve as claimed in any one of the preceding claims, **characterised in that** the valve elements (42, 44) are movable into and out of contact with the respective valve seats along respective movement axes (60, 68, 70) which lie in a common plane parallel to the coupling faces (8, 10).

6. A valve as claimed in claim 5, **characterised in that** the movement axes (60) of the valve elements (42, 44) are aligned with each other, the valve elements (42, 44) being movable in opposite directions from each other to close the respective ports (36, 38).

7. A valve as claimed in claim 5, **characterised in that** the movement axes (68, 70) of the valve elements (42, 44) intersect each other.

8. A valve as claimed in claim 7, **characterised in that** the movement axes (68, 70) of the valve elements (42, 44) intersect each other at 90°.

9. A valve as claimed in any one of claims 6 to 8, **characterised in that** each valve element (42, 44) has a sealing face which extends transversely of the movement axis (60, 68, 70).

10. A valve as claimed in any one of the preceding claims, **characterised in that** each valve seat is circular.

11. A valve as claimed in any one of the preceding claims, **characterised in that** each valve element (42, 44) is mounted on a spindle (46, 48) which is displaceable relatively to the valve body (2), the spindle (46, 48) being sealed with respect to the valve body (2) by a bellows seal (54, 56).

12. A valve as claimed in any one claims 1 to 10, **characterised in that** each valve element (42, 44) is mounted on a spindle (46, 48) which is displaceable relatively to the valve body (2), the spindle (46, 48) being sealed with respect to the valve body (2) by a gland seal (62, 66).

13. A valve as claimed in any one of the preceding claims, **characterised in that** the distance between the coupling faces (8, 10) complies substantially with engineering standards EN558 and/or ASME B16.10.

14. A method of replacing a valve in a pipe system, in which method a single isolating valve is replaced by a double isolating valve in accordance with any one of the preceding claims, the face-to-face distance of the double isolating valve being substantially identical to the face-to-face dimension of the single isolating valve.

## Patentansprüche

1. Ventil, aufweisend ein Ventilkörper (2) mit gegenüberliegend angeordneten Verbindungsabschnitten (8, 10), Einlass- und Auslasspassagen (24, 26), die sich jeweils von den Verbindungsabschnitten (8, 10) innerhalb des Körpers (2) zu einer mittleren Kammer (34) erstrecken, wobei die mittlere Kammer (34) mit den Einlass- und Auslasspassagen (24, 26) durch jeweilige Öffnungen (36, 38) in Verbindung steht, wobei jede Öffnung (36, 38) unabhängig durch ein jeweiliges Ventilelement (42, 44) verschließbar ist, welches Ventilelement in Kontakt mit der Öffnung (36, 38) und aus diesem heraus bewegbar ist, wodurch die mittlere Kammer gegen die jeweilige Einlass- oder Auslasspassage (24, 26) isolierbar ist, **dadurch gekennzeichnet, dass** die Öffnungen (36, 38) Ventilsitze umfassen, die durch jeweilige Ventilsitzkomponenten definiert sind, welche an den Körper (2) gepasst sind, und dass die Verbindungsabschnitte (8, 10) parallele Kupplungsflächen aufweisen.

2. Ventil nach Anspruch 1, **dadurch gekennzeichnet, dass** eine Entlüftungspassage (58) vorhanden ist, welche sich in die mittlere Kammer (34) an einer Position zwischen den Ventilsitzkomponenten (36, 38) öffnet.

3. Ventil nach Anspruch 2, **dadurch gekennzeichnet, dass** ein Absperrventil (22) vorhanden ist, um die Strömung durch die Entlüftungspassage (58) zu steuern.

4. Ventil nach Anspruch 2 oder 3, **dadurch gekennzeichnet, dass** die Entlüftungspassage (58) mit einer Entlüftungsleitung (20) in Verbindung steht, wobei das Ende der Entlüftungsleitung (20), das von der Entlüftungspassage (58) entfernt ist, offen ist.

5. Ventil nach einem der vorstehenden Ansprüche, **dadurch gekennzeichnet, dass** die Ventilelemente (42, 44) entlang jeweiliger Bewegungsachsen (60, 68, 70), welche in einer gemeinsamen Ebene parallel zu den Kupplungsflächen (8, 10) liegen, in Kontakt mit den jeweiligen Ventilsitzen und aus diesem Kontakt bewegt werden können.

6. Ventil nach Anspruch 5, **dadurch gekennzeichnet, dass** die Bewegungsachsen (60) der Ventilelemente (42, 44) miteinander ausgerichtet sind, wobei die Ventilelemente (42, 44) in einander entgegengesetzte Richtungen beweglich sind, um die jeweiligen Öffnungen (36, 38) zu verschließen.

7. Ventil nach Anspruch 5, **dadurch gekennzeichnet, dass** die Bewegungsachsen (68, 70) der Ventilelemente (42, 44) einander schneiden.

8. Ventil nach Anspruch 7, **dadurch gekennzeichnet, dass** die Bewegungsachsen (68, 70) der Ventilelemente (42, 44) einander unter einem Winkel von 90° schneiden.

9. Ventil nach einem der Ansprüche 6 bis 8, **dadurch gekennzeichnet, dass** jedes Ventilelement (42, 44) eine Dichtfläche aufweist, die sich transversal zur Bewegungsachse (60, 68, 70) erstreckt.

10. Ventil nach einem der vorstehenden Ansprüche, **dadurch gekennzeichnet, dass** jeder Ventilsitz kreisförmig ist.

11. Ventil nach einem der vorstehenden Ansprüche, **dadurch gekennzeichnet, dass** jedes Ventilelement (42, 44) auf eine Spindel (46, 48) montiert ist, welche relativ zum Ventilkörper (2) verschiebbar ist, wobei die Spindel (46, 48) in Bezug auf den Ventilkörper (2) durch eine Balgdichtung (54, 56) abgedichtet ist.

12. Ventil nach einem der Ansprüche 1 bis 10, **dadurch gekennzeichnet, dass** jedes Ventilelement (42, 44) auf einer Spindel (46, 48) montiert ist, welche relativ zum Ventilkörper (2) verschiebbar ist, wobei die Spindel (46, 48) in Bezug auf den Ventilkörper (2) durch eine Stopfbuchsendichtung (62, 66) abgedichtet ist.

13. Ventil nach einem der vorstehenden Ansprüche, **dadurch gekennzeichnet, dass** der Abstand zwischen den Kupplungsflächen (8, 10) im Wesentlichen den Ingenieurstandards EN558 und/oder ASME B16.10 entspricht.

14. Verfahren zum Ersetzen eines Ventils in einem Rohrsystem, gemäß dem ein Einzelabsperrventil durch ein Doppelabsperrventil gemäß einem der vorstehenden Ansprüche ersetzt wird, wobei der Abstand zwischen den Flächen des Doppelabsperrventils im Wesentlichen identisch mit dem Abstand zwischen den Flächen des Einzelabsperrventils ist.

## Revendications

1. Soupape, comprenant un corps de soupape (2) présentant des parties de connexion disposées opposées (8, 10), des passages d'entrée et de sortie {24, 36) s'étendant respectivement des parties de connexion (8, 10) dans le corps (2) vers une chambre intermédiaire (34), la chambre intermédiaire (34) communiquant avec les passages d'entrée et de sortie (24, 26) par l'intermédiaire d'orifices respectifs (36, 38), chaque orifice (36, 38) pouvant être fermé indépendamment par un élément de soupape respectif (42, 44) qui peut être déplacé en et hors contact avec l'orifice (36, 38), pour ainsi isoler la chambre intermédiaire du passage d'entrée ou de sortie respectif (24, 26), **caractérisée par le fait que** les orifices (36, 38) comprennent des sièges de soupape définis par des éléments de siège de soupape respectifs montés sur le corps (2), et **par le fait que** les parties de connexion (8, 10) comprennent des faces de couplage parallèles.

2. Soupape selon la revendication 1, **caractérisée par le fait qu'**il est prévu un passage de purge (58) qui donne dans la chambre intermédiaire (34) en une position entre les éléments de siège de soupape (36, 38).

3. Soupape selon la revendication 2, **caractérisée par le fait qu'**il est prévu une soupape d'arrêt (22) pour contrôler le flux à travers le passage de purge (58).

4. Soupape selon la revendication 2 ou 3, **caractérisée par le fait que** le passage de purge (58) communique avec un conduit de purge (20), l'extrémité du conduit de purge (20) éloignée du passage de purge (59) étant ouverte.

5. Soupape selon l'une ou l'autre des revendications précédentes, **caractérisée par le fait que** les éléments de soupape (42, 44) peuvent être déplacés en et hors contact avec les sièges de soupape respectifs le long d'axes de déplacement respectifs (60, 68, 70) situés dans un plan commun parallèle aux faces de couplage (9, 10).

6. Soupape selon la revendication 5, **caractérisée par le fait que** les axes de déplacement (60) des éléments de soupape (42, 44) sont alignés l'un sur l'autre, les éléments de soupape (42, 44) pouvant être déplacés dans des directions opposées l'un à l'autre, pour fermer les orifices respectifs (36, 38).

7. Soupape selon la revendication 5, **caractérisée par le fait que** les axes de déplacement (68, 70) des éléments de soupape {42, 44) se coupent.

8. Soupape selon la revendication 7, **caractérisée par le fait que** les axes de déplacement (68, 70) des éléments de soupape {42, 44) se coupent à 90°.

9. Soupape selon l'une quelconque des revendications 6 à 8, **caractérisée par le fait que** chaque élément de soupape (43, 44) présente une face d'étanchéité qui s'étend transversalement à l'axe de déplacement (60, 68, 70).

10. Soupape selon l'une quelconque des revendications précédentes, **caractérisée par le fait que** chaque siège de soupape est circulaire.

11. Soupape selon l'une quelconque des revendications précédentes, **caractérisée par le fait que** chaque élément de soupape (42, 44) est monté sur un axe (46, 48) qui peut être déplacé par rapport au corps de soupape (2), l'axe (46, 48) étant rendu étanche par rapport au corps de soupape (2) par une garniture à soufflet (54, 56).

12. Soupape selon l'une quelconque des revendications 1 à 10, **caractérisée par le fait que** chaque élément de soupape (42, 44) est monté sur un axe (46, 48) qui peut être déplacé par rapport au corps de soupape (2), l'axe (46, 48) étant rendu étanche par rapport au corps de soupape (2) par une garniture à gland (62, 66).

13. Soupape selon l'une quelconque des revendications précédentes, **caractérisée par le fait que** la distance entre les faces de couplage (8, 10) répond substantiellement aux normes d'ingéniérie EN558 et/ou ASME B16.10.

14. Procédé pour remplacer une soupape dans un système de tuyauterie, procédé dans lequel une soupape d'isolement simple est remplacée par une soupape d'isolement double selon l'une quelconque des revendications précédentes, la distance entre faces de la soupape d'isolement double étant sensiblement identique à la dimension entre faces de la soupape d'isolement simple.
